# EUROPEAN PATENT APPLICATION

(11) **EP 4 516 540 A1**
(43) Date of publication of application: **05.03.2025**
(21) Application number: 23915694.6
(22) Date of filing: 07.11.2023
(51) Int. Cl.: B60H 1/00

(54) **VEHICLE-MOUNTED AIR CONDITIONING SYSTEM AND VEHICLE**

(30) Priority: 13.01.2023 CN 202310057903
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIU, Yabin, Ningbo, Zhejiang 315899 (CN); XING, Xiaodong, Ningbo, Zhejiang 315899 (CN); LIU, Chuang, Ningbo, Zhejiang 315899 (CN); XIA, Songyong, Ningbo, Zhejiang 315899 (CN); SUN, Ligang, Ningbo, Zhejiang 315899 (CN)
(74) Representative: Murgitroyd & Company
(86) International application number: PCT/CN2023/130084
(87) International publication number: WO 2024/148936

(57) **Abstract**

The present disclosure provides a vehicle air conditioning system and a vehicle, which relate to the field of automotive technologies. The vehicle air conditioning system includes: an air conditioning loop, including a heat exchanger, a gas supply enthalpy-increasing module, and a condenser, where the condenser is connected to the heat exchanger via the gas supply enthalpy-increasing module; an air conditioning water pump, including a cooling water pump and a heating water pump, where the cooling water pump is connected to the heat exchanger, a to-be-cooled water flow driven by the cooling water pump when it operates flows through the heat exchanger, the heating water pump is connected to the condenser, and a to-be-heated water flow driven by the heating water pump when it operates flows through the condenser; an air conditioning box, including a first core and a second core, where the first core and the second core are each connected to the heating water pump and the cooling water pump; and a motor loop, including a multi-way valve and a driving motor, where the driving motor is connected to the air conditioning loop via the multi-way valve. The vehicle air conditioning system provided in the present disclosure has good cooling and heating effects.

## Description

### CROSS-REFERENCE TO RELATED APPLICATIONS

The present application claims priority to Chinese Patent Application No. CN202310057903.2 filed on January 13, 2023, which is incorporated herein by reference in its entirety.

### TECHNICAL FIELD

The present disclosure relates to the field of automotive technologies, and in particular, to a vehicle air conditioning system and a vehicle.

### BACKGROUND

R134a (C₂H₂F₄, 1,1,1,2-Tetrafluoroethane) or r1234yf (2,3,3,3-Tetrafluoropropene) is used as refrigerant in vehicle air conditioning systems. In conditions at a low temperature, for example, a condition where a temperature is below -18°C, a water-based positive temperature coefficient thermistor heater (PTC) is mainly used for heating an occupant compartment. When an ambient temperature is -10°C or above, a heat pump air conditioner and an air-based PTC are mainly used for heating the occupant compartment. However, for the heat pump technology using R134a or r1234yf as refrigerant, R134a does not comply with the national carbon neutrality plan, and a heating effect in a low-temperature environment is poor. In addition, when a water-based PTC or an air-based PTC is used as a main heating source, a temperature in the occupant compartment cannot reach a demand for heating in the low-temperature environment.

### SUMMARY

In view of the foregoing disadvantages in the conventional technology, an objective of the present disclosure is to provide a vehicle air conditioning system and a vehicle. The vehicle air conditioning system according to the present disclosure can meet a demand for heating in a low-temperature environment without assistance of any PTC heaters, and the vehicle air conditioning system has good usage safety and high energy utilization.

To achieve the foregoing and other related objectives, the present disclosure provides a vehicle air conditioning system. The system includes an air conditioning loop, an air conditioning water pump, an air conditioning box, and a motor loop. The air conditioning loop includes a heat exchanger, a gas supply enthalpy-increasing module, and a condenser. An output end of the condenser is connected to an input end of the gas supply enthalpy-increasing module, and an output end of the gas supply enthalpy-increasing module is connected to an input end of the heat exchanger. The air conditioning water pump includes a cooling water pump and a heating water pump. The cooling water pump is connected to the heat exchanger, and a to-be-cooled water flow driven by the cooling water pump when the cooling water pump operates flows through the heat exchanger. The heating water pump is connected to the condenser, and a to-be-heated water flow driven by the heating water pump when the heating water pump operates flows through the condenser. The air conditioning box includes a first core and a second core. The first core and the second core are each connected to the heating water pump and the cooling water pump. The to-be-cooled water flow or the to-be-heated water flow flows through the first core and the second core. The motor loop includes a multi-way valve and a driving motor. The driving motor is connected to a port of the multi-way valve. Ports of the multi-way valve are communicated to cause the driving motor to be connected to the air conditioning loop.

In an embodiment of the present disclosure, the air conditioning loop further includes a first electronic expansion valve, and the condenser is connected to the gas supply enthalpy-increasing module via the first electronic expansion valve.

In an embodiment of the present disclosure, the air conditioning water pump further includes a first three-way valve, and the first three-way valve is connected to the heating water pump.

In an embodiment of the present disclosure, the air conditioning water pump further includes a second three-way valve, and the cooling water pump is connected to the second core via the second three-way valve.

In an embodiment of the present disclosure, the air conditioning box includes an air conditioning box body, and the first core and the second core are arranged in an inner chamber of the air conditioning box body.

In an embodiment of the present disclosure, the motor loop includes a driving-motor water pump, and one end of the driving-motor water pump is connected to the driving motor.

In an embodiment of the present disclosure, the motor loop includes a radiator, one end of the radiator is connected to the driving-motor water pump, and the other end of the radiator is connected to a port of the multi-way valve.

In an embodiment of the present disclosure, the vehicle air conditioning system further includes a battery loop, the battery loop includes a battery water pump, and one end of the battery water pump is connected to a port of the multi-way valve.

In an embodiment of the present disclosure, the battery loop further includes a vehicle battery pack, one end of the vehicle battery pack is connected to the battery water pump, and the other end of the vehicle battery pack is connected to a port of the multi-way valve.

The present disclosure further provides a vehicle. The vehicle includes the vehicle air conditioning system according to any one of the foregoing aspects.

In conclusion, in the vehicle air conditioning system and the vehicle according to the present disclosure, the R134a or r1234yf refrigerant is replaced with the R290 (propane) refrigerant, which complies with the national carbon neutrality plan. In addition, rapid heating in a low-temperature environment, for example, in an environment of -30°C, can be achieved, so as to meet a demand for heating the entire vehicle. Furthermore, the refrigerant does not enter the occupant compartment, and the cooling loop and the heating loop of the air conditioning system are centrally arranged, thereby ensuring safety of the vehicle air conditioning system. With the first core and the second core, dual-core cooling, dual-core heating, and cooling by the second core and heating by the first core are achieved, so as to meet requirements for the vehicle air conditioning system in terms of heating and heat supply under various conditions, thereby improving cooling and heating effects of the vehicle air conditioning system.

Certainly, not all the foregoing advantages are required to be achieved in any product implementing the present disclosure.

### BRIEF DESCRIPTION OF THE DRAWINGS

To describe the technical solutions in the embodiments of the present disclosure or in the conventional technology more clearly, the following briefly describes the drawings required for describing the embodiments or the conventional technology. Apparently, the drawings in the following description only show some embodiments of the present disclosure, and those skilled in the art may obtain other drawings from these drawings without creative efforts.
FIG. 1 is a schematic structural diagram of a vehicle air conditioning system according to the present disclosure.
FIG. 2 is a schematic structural diagram of a vehicle air conditioning system according to the present disclosure in a case of implementing dual-core cooling.
FIG. 3 is a schematic structural diagram of a vehicle air conditioning system according to the present disclosure in a case of implementing dual-core heating.
FIG. 4 is a schematic structural diagram of a vehicle air conditioning system according to the present disclosure in a case of heating by using a first core and cooling by using a second core.
FIG. 5 is a schematic structural diagram of a vehicle air conditioning system according to the present disclosure in a case of cooling a vehicle battery pack.
FIG. 6 is a schematic structural diagram of a vehicle air conditioning system according to the present disclosure in a case of heating a vehicle battery pack.
FIG. 7 is a schematic structural diagram of a vehicle air conditioning system with no heating or heat radiation requirement according to the present disclosure.

Reference numerals of components are as follows:

| | | | |
|---|---|---|---|
| 100 | air conditioning loop | 110 | heat exchanger |
| 120 | compressor | 130 | condenser |
| 140 | gas supply enthalpy-increasing module | | |
| 150 | first electronic expansion valve | | |
| 160 | second electronic expansion valve | | |
| 200 | air conditioning water pump | 210 | cooling water pump |
| 220 | heating water pump | 300 | air conditioning box |
| 310 | first core | 320 | second core |
| 330 | blower | 340 | air conditioning box body |
| 400 | motor loop | 410 | driving motor |
| 420 | driving-motor water pump | 430 | radiator |
| 440 | water kettle | 450 | multi-way valve |
| 500 | battery loop | 510 | vehicle battery pack |
| 520 | battery water pump | | |

### DETAILED DESCRIPTION OF THE EMBODIMENTS

The following describes implementations of the present disclosure by using specific examples. Those skilled in the art may easily understand other advantages and effects of the present disclosure through the content disclosed in this specification. The present disclosure may also be implemented or applied in other different specific implementations. Details in this specification may also be modified or changed based on different ideas and applications without departing from the spirit of the present disclosure. It should be noted that the following embodiments and features in the embodiments may be combined with each other without conflict. It should also be understood that the terms used in the embodiments of the present disclosure are used to describe specific implementations, and are not intended to limit the protection scope of the present disclosure. In the following embodiments, the experimental methods in which specific conditions are not stated are generally carried out according to conventional conditions or according to the conditions recommended by manufacturers.

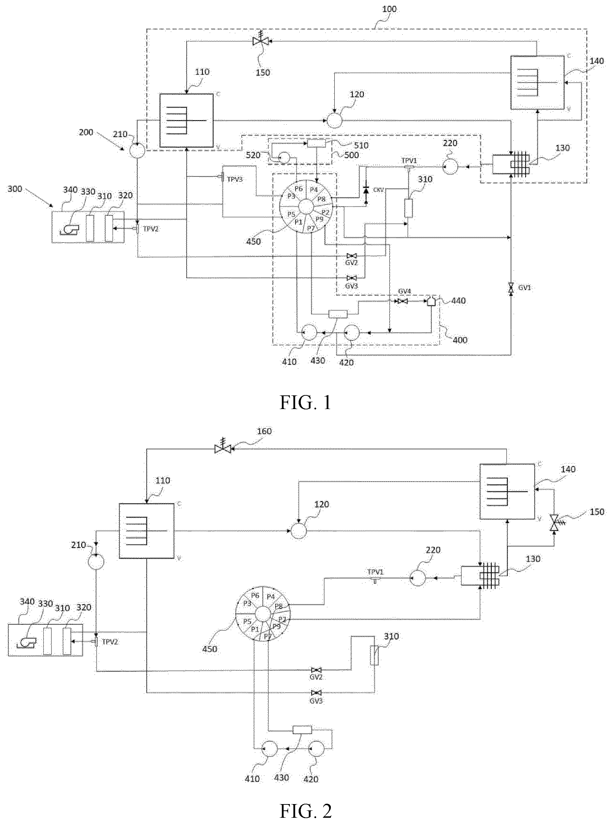

Reference is made to FIG. 1 to FIG. 7. It should be noted that, the structure, scale, size, and the like shown in the drawings of this specification are only used to match the content disclosed in this specification and for those skilled in the art to understand and read, which are not used to limit the limitations for implementing the present disclosure and thus are not technically substantial. Any structural modification, scaling relation change, or size adjustment made without affecting the effects and objectives that can be achieved by the present disclosure shall fall within the scope that can be encompassed by the technical content disclosed in the present disclosure. Moreover, the terms such as "upper", "lower," "left", "right", "middle", and "a/an" used in this specification are merely employed for clarity of description, and not intended to limit the scope of implementation of the present disclosure, and the change or adjustment of the relative relationships shall be deemed as falling within the scope of implementation of the present disclosure without substantial alteration of technical content.

For numerical ranges given in the embodiments, it should be understood that, unless otherwise specified in the present disclosure, two endpoints of each numerical range and any value between the two endpoints are alternatives. Unless otherwise defined, any methods, devices, and materials equivalent or similar to the methods, devices, and materials described in the embodiments of the present disclosure may also be used to implement the present disclosure by those skilled in the art based on all technical and scientific terms used in the present disclosure and their knowledge of the conventional technology and the description of the present disclosure.

A vehicle air conditioning system is provided in an embodiment of the present disclosure. The vehicle air conditioning system is applicable to a vehicle provided in an embodiment of the present disclosure. The vehicle air conditioning system has a simple and compact structure, which not only reduces an amount of refrigerant required to be injected, but also occupies less space in the vehicle, providing space for arrangement of other auxiliary functions of the vehicle. In addition, after the vehicle air conditioning system is started, the vehicle can meet a demand for supplying heat to an occupant compartment safely in a low-temperature environment, for example, an environment of -30°C, thereby improving vehicle usage experience of customers. In addition, the vehicle can meet a demand for cooling the occupant compartment in a high-temperature environment. Furthermore, the vehicle can meet a demand for heating and cooling a vehicle battery, which prevents a failure of the vehicle battery caused by an excessively high or low temperature of the vehicle battery, thereby avoiding potential hazards during driving.

Referring to FIG. 1, in an embodiment of the present disclosure, the vehicle air conditioning system provided in the present application includes an air conditioning loop 100, an air conditioning water pump 200, an air conditioning box 300, a motor loop 400, and a battery loop 500. The air conditioning water pump 200 and the air conditioning loop 100 provide pipeline connections. A to-be-cooled water flow driven by the air conditioning water pump 200 when the air conditioning water pump 200 operates flows through a heat exchanger 110 in the air conditioning loop 100, and a to-be-heated water flow driven by the air conditioning water pump 200 when the air conditioning water pump 200 operates flows through a condenser 140 in the air conditioning loop 100, so that a hot water flow and a cold water flow are generated. The air conditioning box 300 is connected to the air conditioning water pump 200, and a water flow driven by the air conditioning water pump 200 when the air conditioning water pump 200 operates flows through the air conditioning loop 100 and then flows through the air conditioning box 300. The motor loop 400 includes a multi-way valve 450. Ports of the multi-way valve 450 are communicated, so that the motor loop 400 is connected to the air conditioning loop 100 and the battery loop 500.

Referring to FIG. 1, in an embodiment of the present disclosure, the air conditioning loop 100 includes the heat exchanger 110, a compressor 120, the condenser 130, a gas supply enthalpy-increasing module 140, a first electronic expansion valve 150, and a second electronic expansion valve 160. There is refrigerant, for example, R290, in the heat exchanger 110. The R134 refrigerant and the R1234yf refrigerant each has a global warming potential (Global Warming Potential, GWP) much greater than a GWP of the R290 refrigerant. In addition, the R290 has a lower saturation temperature at a low pressure, and R290 can even absorb heat from an environment, for example, an environment of -30°C. Therefore, the R290 refrigerant is preferably used in the present application. An output end of the heat exchanger 110 includes a water-flow output end and a gas output end. The gas output end of the heat exchanger 110 is connected to an input end of the compressor 120, and an output end of the compressor 120 is connected to an input end of the condenser 130. The condenser 130 includes a water-flow output end and a liquid output end. The liquid output end of the condenser 130 is connected to the gas supply enthalpy-increasing module 140, and the liquid output end of the condenser 130 is connected to the gas supply enthalpy-increasing module 140 via the first electronic expansion valve 150. The water-flow output end of the condenser 130 and the water-flow output end of the heat exchanger 110 are connected to the air conditioning water pump 200. An output end of the gas supply enthalpy-increasing module 140 is connected to the input end of the compressor 120 and one end of the second electronic expansion valve 160, and the other end of the second electronic expansion valve 160 is connected to the heat exchanger 110.

Referring to FIG. 1, in an embodiment of the present disclosure, the refrigerant in the heat exchanger 110 vaporizes into a gaseous state by absorbing heat from the air through the heat exchanger 110. Therefore, a temperature in the heat exchanger 110 decreases as heat is absorbed during the vaporization of the refrigerant. The heat exchanger 110 is an ideal device for heat exchange between liquids or between liquid and gas. The heat exchanger 110 used in the present application is, for example, a plate heat exchanger. The plate heat exchanger is a high-efficiency heat exchanger formed by stacking a series of corrugated metal plates. The plate heat exchanger has features such as high heat exchange efficiency, a low heat loss, a compact and lightweight structure, a small occupied area, wide applicability, and a long service life. The refrigerant in the heat exchanger 110 is transferred to the compressor 120 after vaporizing. The compressor 1220 compresses the gaseous refrigerant into a high-temperature and high-pressure state. Then, the compressor 120 transfers the high-temperature and high-pressure gaseous refrigerant to the condenser 130. After being cooled in the condenser 130, the high-temperature and high-pressure gaseous refrigerant is converted into a normal-temperature and high-pressure liquid refrigerant. Since the high-pressure and high-temperature gaseous refrigerant releases a large amount of heat during cooling, the temperature of the condenser 130 increases. The condenser 130 then transfers the liquid refrigerant to the gas supply enthalpy-increasing module 140.

Referring to FIG. 1, in an embodiment of the present disclosure, since the compressor 120 may experience an increase in a suction specific volume, an increase in a pressure ratio, and a rapid increase in a discharge temperature when operating at a low evaporation temperature, causing a significant deterioration in performance of the compressor 120, insufficient heating production, and operational difficulties, the gas supply enthalpy-increasing module 140 is added to address these problems. The gas supply enthalpy-increasing module 140 compresses the gas in an intermediate chamber of the compressor 120, increasing a discharge volume, reducing a discharge temperature, and improving a heating capability of the compressor 120. Therefore, after the liquid refrigerant is generated in the condenser 130, the liquid refrigerant is split into two flows: a main flow and a secondary flow before entering the gas supply enthalpy-increasing module 140. The liquid refrigerant from the main flow directly enters the gas supply enthalpy-increasing module 140. The liquid refrigerant from the secondary flow flows through the liquid electronic expansion valve 150 for throttling and pressure reduction, then is converted into a gas-liquid mixture and enters the gas supply enthalpy-increasing module 140. The gas-liquid mixture from the secondary flow absorbs heat and is converted into gas, than the gas supply enthalpy-increasing module 140 transfers the gaseous refrigerant to the compressor 120, increasing a volume of gas in the compressor 120. The gas supply enthalpy-increasing module 140 transfers the liquid refrigerant from the main flow to the heat exchanger 110 through the second electronic expansion valve 160. Then, the liquid refrigerant vaporizes in the heat exchanger 110 while absorbing heat, thereby implementing recycling of the refrigerant. A temperature of the heat exchanger 110 is low, which causes a low temperature of the ambient air, so that the heat exchanger 110 meets a demand for cooling and the condenser 130 meets a demand for heating. The first electronic expansion valve 150 and the second electronic expansion valve 160 each control, based on an electrical signal generated by a regulated parameter, a voltage or current applied to the electronic expansion valve, so as to adjust a liquid supply amount. In addition, the electronic expansion valves each are capable of adjusting the liquid supply amount with a wide range and have a fast response to the adjustment, and therefore the electronic expansion valves are applicable to scenarios with substantial liquid load fluctuations or a broad range of operating conditions.

Referring to FIG. 1, in an embodiment of the present disclosure, the air conditioning water pump 200 includes a cooling water pump 210, a heating water pump 220, a first three-way valve TPV1, a second three-way valve TPV2, a third three-way valve TPV3, a second stop valve GV2, and a third stop valve GV3. The cooling water pump 210 is connected to the heat exchanger 110. A to-be-cooled water flow driven by the cooling water pump 210 when the cooling water pump 210 operates flows through a low-temperature area of the heat exchanger 110 to obtain a cold water flow. The heating water pump 220 is connected to the condenser 130. A to-be-heated water flow driven by the heating water pump 220 when the heating water pump 220 operates flows through a high-temperature area of the condenser 130 to obtain a hot water flow. One end of the first three-way valve TPV1 is connected to the heating water pump 220, one end of the second three-way valve TPV2 is connected to the cooling water pump 210, and the third three-way valve TPV3 is connected to the heat exchanger 110, the cooling water pump 210, and the second three-way valve TPV2.

Referring to FIG. 1, in an embodiment of the present disclosure, considering cooling of the condenser 130 and energy utilization, water with a large specific heat capacity is used as a heat carrier for heat transfer in the present application. Therefore, by using the to-be-cooled water flow which is driven by the cooling water pump 210 and flows through the heat exchanger 110 having a low temperature, a low-temperature water flow is obtained. By using the to-be-heated water flow which is driven by the heating water pump 220 and flows through the condenser 130 having a high temperature, a high-temperature water flow is obtained. By adjusting the three-way valve, the first core 310 and the second core 320 in the air conditioning box 300 each exchange heat with the heat exchanger 110 or the condenser 130 by using a certain amount of water flow, to reduce the temperature or increase the temperature.

Referring to FIG. 1, in an embodiment of the present disclosure, the air conditioning box 300 includes a first core 310, a second core 320, a blower 330, and an air conditioning box body 340. The first core 310 and the second core 320 are arranged in parallel in an inner chamber of the air conditioning box body 340. The first core 310 and the second core 320 are, for example, plate heat exchangers. The blower 330 is also arranged in the air conditioning box body 340, and a blower outlet of the blower 330 faces the first core 310 and the second core 320. The first core 310 and the second core 320 are connected to the heating water pump 220 via the first three-way valve TPV1, and the to-be-heated water flow driven by the heating water pump 220 flows through the first core 310 and the second core 320 via the first three-way valve TPV1. The first core 310 and the second core 320 are connected to the cooling water pump 210 via the second three-way valve TPV2, and the to-be-cooled water flow driven by the cooling water pump 210 flows through the first core 310 and the second core 320 via the second three-way valve TPV2. One end of the first core 310 is connected to the cooling water pump 210 via the second stop valve GV2, and the other end of the first core 310 is connected to the heat exchanger 110 via the third stop valve GV3.

Referring to FIG. 1, in an embodiment of the present disclosure, the to-be-heated water flow and the to-be-cooled water flow flow through the first core 310 and the second core 320, to cool or heat the inside of the first core 310 and the inside of the second core 320. The first core 310 and the second core 320 that are cooled or heated internally causes the ambient air to be cooled or heated. The blower 330 blows cold air or hot air to achieve a cooling effect or a heating effect at an outlet of the air conditioning box 300.

Referring to FIG. 1, in an embodiment of the present disclosure, the motor loop 400 includes a driving motor 410, a driving-motor water pump 420, a radiator 430, a water kettle 440, a multi-way valve 450, and a fourth stop valve GV4. The multi-way valve 450 is, for example, a nine-way valve. One end of the driving motor 410 is connected to a port P1 of the multi-way valve 450, the other end of the driving motor 410 is connected to one end of the driving-motor water pump 420, and the driving motor 410 is also connected to the condenser 130 via the first stop valve GV1. The other end of the driving-motor water pump 420 is connected to the radiator 430, the water kettle 440, and a port P9 of the multi-way valve 450. The water kettle 440 is connected to one end of the fourth stop valve GV4, the other end of the fourth stop valve GV4 is connected to one end of the radiator 430, and the other end of the radiator 430 is connected to a port P7 of the multi-way valve 450. A port P5 of the multi-way valve 450 is connected to the cooling water pump 210. A port P3 of the multi-way valve 450 is connected to the heat exchanger 110 via the third three-way valve TPV3. A port P8 of the multi-way valve 450 is connected to the heating water pump 220 via the first three-way valve TPV1. The port P2 of the multi-way valve 450 is connected to one end of a one-way valve CKV and the condenser 130, and the other end of the one-way valve CKV is connected to the heating water pump 220 via the first three-way valve TPV1. The water kettle 440 is configured to accommodate a cooling liquid such as water and discharge air from the air conditioning system. The driving-motor water pump 420 drives the cooling liquid in the water kettle 440 to move, so that the cooling liquid in the water kettle 440 flows into the motor loop 400.

Referring to FIG. 1, in an embodiment of the present disclosure, the battery loop 500 includes a vehicle battery pack 510 and a battery water pump 520. One end of the battery water pump 520 is connected to a port P6 of the multi-way valve 450, and the other end of the battery water pump 520 is connected to one end of the vehicle battery pack 510. The other end of the vehicle battery pack 510 is connected to a port P4 of the multi-way valve 450.

Referring to FIG. 1 and FIG. 2, in an embodiment of the present disclosure, for example, the first core 310 and the second core 320 in the air conditioning system provided in the present application may be used for cooling simultaneously. After the air conditioning system is started, due to throttling of the second electronic expansion valve 160, the liquid refrigerant, for example, the R290 refrigerant, in the heat exchanger 110 vaporizes and absorbs a large amount of heat from the heat exchanger 110, resulting in a decrease of the temperature in the heat exchanger 110. Then, the gaseous refrigerant, for example, the R290 refrigerant, is transferred to the compressor 120, and the compressor 120 compresses the gaseous refrigerant to obtain a high-temperature and high-pressure gaseous refrigerant. Next, the compressor 120 transfers the high-temperature and high-pressure gaseous refrigerant to the condenser 130 for cooling. A large amount of heat is released when the gaseous refrigerant liquefies, and therefore a temperature in the condenser 130 increases. At this time, the cooling water pump 210 is turned on. The cooling water pump 210 operates and drives the to-be-cooled water flow to flow through the heat exchanger 110 having a low temperature inside. The to-be-heated water flow is converted into a cold water flow, and then the second stop valve GV2 and the third stop valve GV3 are opened. Then, the port of the first three-way valve TPV1 that is connected to the first core 310 is closed, and the port of the third three-way valve TPV3 that is connected to the heat exchanger 110 is closed. By adjusting an opening degree of the second three-way valve TPV2, the first core 310 and the second core 320 in the air conditioning box 300 exchange heat with the heat exchanger 110 by using a certain amount of water flow to reduce the temperature, in which the cold water flow flows through the first core 310 and the second core 320. Then, the airflow produced by the blower 330 arranged in the air conditioning box body 340 exchanges heat with the cold water flow flowing through the first core 310 and the second core 320, to achieve cooling. The cold water flow, driven by the cooling water pump 210, first flows through the second core 320 via the second three-way valve TPV2, then successively flows through the port of the second three-way valve TPV2 that is connected to the second stop valve GV2, the second stop valve GV2, the first core 310, and then flows through the heat exchanger 110 via the third stop valve GV3.

Referring to FIG. 2, in an embodiment of the present disclosure, to avoid damage to the condenser 130 due to an excessive temperature, the condenser 130 is required to be cooled by using the motor loop 400. In this case, the port P1 and the port P2 of the multi-way valve 450 are communicated with each other, the port P7 and the port P8 are communicated with each other, and the heating water pump 220 is turned on. In this case, the to-be-heated water flow driven by the heating water pump 220 when the heating water pump 220 operates flows through the condenser 130, and the to-be-heated water flow is converted into a hot water flow. The hot water flow then enters the multi-way valve 450 through the port P8 of the multi-way valve 450 and flows out of the multi-way valve 450 through the port P7 of the multi-way valve 450. Then, the hot water flow flows through the radiator 430, and the radiator 430 cools the hot water flow to obtain a normal-temperature water flow. The normal-temperature water flow then successively flows through the driving-motor water pump 420, the driving motor, the port P1 of the multi-way valve 450, the port P2 of the multi-way valve 450, and finally enters the condenser 130. In this way, the condenser 130 is cooled.

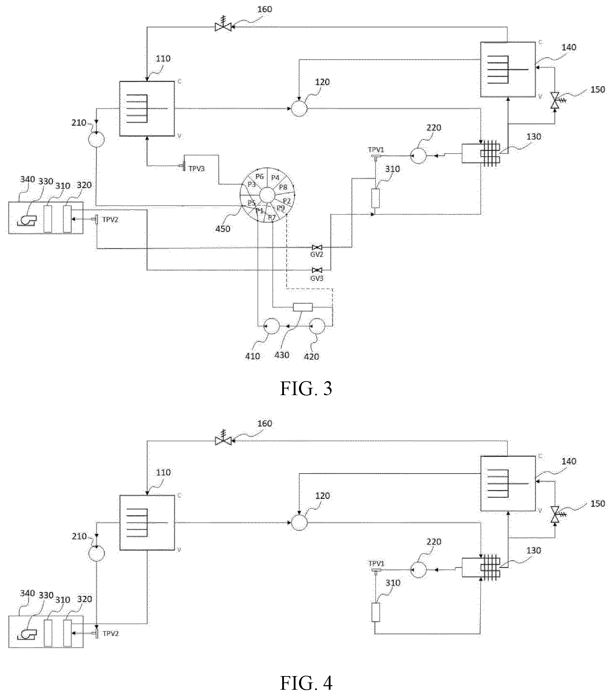

Referring to FIG. 3, in still another embodiment of the present disclosure, the first core 310 and the second core 320 in the air conditioning system provided in the present application may be used for heating simultaneously. After the air conditioning system is started, since the gaseous refrigerant at the condenser 130 liquefies and releases a large amount of heat, the temperature at the condenser 130 is relatively high. In this case, the heating water pump 220 is turned on, and the to-be-heated water flow driven by the heating water pump 220 when the heating water pump 220 operates flows through the condenser 130 and is converted into a hot water flow. Then, the second stop valve GV2 and the third stop valve GV3 are opened. By adjusting an opening degree of the first three-way valve TPV1, one part of the hot water flow flows through the first core 310 and then returns to the condenser 130. The other part of the hot water flow flows through the opened second stop valve GV2, and then flows through the second three-way valve TPV2 and the second core 320. By adjusting the opening degree of the second three-way valve TPV2, the second core 320 exchanges heat with the condenser 130 by using a certain amount of water flow to increase the temperature, and then the water flows through the third stop valve GV3 and returns to the condenser 130. Then, the airflow produced by the blower 330 in the air conditioning box body 340 exchanges heat with the hot water flow in the first core 310 and the second core 320 to implement heating.

Referring to FIG. 1 and FIG. 3, in still another embodiment of the present disclosure, in a case that a temperature of water at the water-flow output end of the heat exchanger 110 is lower than an ambient temperature, the port P1 and the port P3 of the multi-way valve 450 are communicated with each other, and the port P5 and the port P7 of the multi-way valve 450 are communicated with each other. Then, the cooling water pump 210 is turned on. The radiator 430 absorbs heat from the outside air, and then heat is transferred from the motor loop 400 to the heat exchanger 110. In a case that a temperature of water at the water-flow output end of the heat exchanger 110 is higher than an ambient temperature, the port P1 and the port P3 of the multi-way valve 450 are communicated with each other, and the port P5 and the port P9 of the multi-way valve 450 are communicated with each other. Then, the cooling water pump 210 is turned on, the radiator 430 is bypassed, and then heat is transferred from the motor loop 400 to the heat exchanger 110, so as to prevent heat from being dissipated into the outside, thereby improving an endurance capability of the vehicle in a cold environment.

Referring to FIG. 1 and FIG. 4, in still another embodiment of the present disclosure, when the first core 310 in the air conditioning system provided in the present application is used for implementing heating and the second core 320 in the air conditioning system provided in the present application is used for implementing cooling, since the temperature in the heat exchanger 110 is low and the temperature in the condenser 130 is high, the cooling water pump 210 and the heating water pump 220 are turned on, and the second stop valve GV2 and the third stop valve GV3 are closed. By adjusting the opening degree of the first three-way valve TPV1, the first core 310 in the air conditioning box body 340 exchanges heat with the condenser 130 by using a certain amount of water flow to increase the temperature. By adjusting the opening degree of the second three-way valve TPV2, the second core 320 in the air conditioning box body 340 exchanges heat with the heat exchanger 110 by using a certain of water flow to reduce the temperature. Then, the airflow produced by the blower 330 in the air conditioning box body 340 exchanges heat with the cold water flow or hot water flow in the first core 310 and the second core 320, to implement heating or cooling. In a case that the condenser 130 in the air conditioning system does not dissipate heat adequately in a high-temperature environment, the port P1 and the port P2 of the multi-way valve 450 are communicated with each other, and the port P7 and the port P8 of the multi-way valve 450 are communicated with each other. Then, the heating water pump 220 is turned on, and the condenser 130 is cooled by using the radiator 430 in the motor loop 400.

Referring to FIG. 1 and FIG. 4, in still another embodiment of the present disclosure, in a case that the refrigerant in the heat exchanger 110 of the air conditioning system absorbs inadequate heat when vaporizing in a low-temperature environment, and a temperature of water at the water-flow output end of the heat exchanger 110 is lower than an ambient temperature, the port P1 and the port P3 of the multi-way valve 450 are communicated with each other, and the port P5 and the port P7 of the multi-way valve 450 are communicated with each other. Then, the cooling water pump is turned on. The radiator 430 absorbs heat from the outside air, and then the heat absorbed by the radiator 430 is transferred to the heat exchanger 110 through the motor loop 400 by using water as a medium, to supplement heat to the heat exchanger 110, thereby improving a heating capability of the condenser 130. In a case that the refrigerant in the heat exchanger 110 of the air conditioning system absorbs inadequate heat when vaporizing in a low-temperature environment, and a temperature of water at the water-flow output end of the heat exchanger 110 is higher than an ambient temperature, the port P1 and the port P3 of the multi-way valve 450 are communicated with each other, and the port P5 and the port P9 of the multi-way valve 450 are communicated with each other. Then, the cooling water pump 210 is turned on to transfer heat of the water at the water-flow output end of the heat exchanger 110 to the heat exchanger 110 through the motor loop 400, thereby preventing heat from being dissipated into the outside. In this case, the radiator 430 is bypassed. By heating using the first core 310 and cooling using the second core 320, a demand for dehumidification at various temperatures can be met.

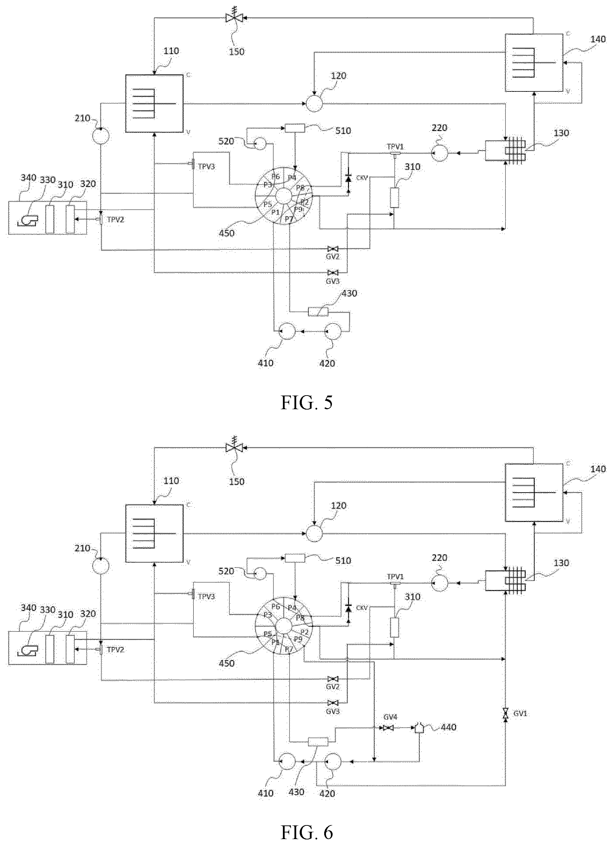

Referring to FIG. 1 and FIG. 5, in still another embodiment of the present disclosure, by means of communication between the ports of the multi-way valve 450, the air conditioning water pump 200 flexibly distributes the water flow to manage the heat between the heat exchanger 110, the condenser 130, the vehicle battery pack 510, and the motor loop 400, thereby improving heat utilization. For example, the vehicle battery pack 510 can be cooled by the air conditioning system. The cooling water pump 210 and the battery water pump 520 are turned on, the port P5 and the port P6 of the multi-way valve 450 are communicated with each other, and the port P3 and the port P4 of the multi-way valve 450 are communicated with each other. The port P5 of the multi-way valve 450 is connected to the cooling water pump 210, the port P6 of the multi-way valve 450 is connected to the battery water pump 520, one end of the vehicle battery pack 510 is connected to the port P4 of the multi-way valve 450, the port P3 of the multi-way valve 450 is connected to one port of the third three-way valve TPV3, another port of the third three-way valve TPV3 is connected to the heat exchanger 110, and the last port of the third three-way valve TPV3 is closed. By adjusting the opening degree of the third three-way valve TPV3, the battery loop 500 exchanges heat with the heat exchanger 110 by using a certain amount of water flow to reduce the temperature. The second stop valve GV2 and the third stop valve GV3 are closed, and the cold water flow driven by the cooling water pump 210 flows through the second core 320 via the second three-way valve TPV2. By adjusting the opening degree of the second three-way valve TPV2, the second core 320 exchanges heat with the heat exchanger 110 by using a certain amount of water flow amount to reduce the temperature. In a low-temperature environment, in a case that the temperature of the vehicle battery pack 510 is relatively high, heat of the vehicle battery pack 510 may alternatively be transferred to the heat exchanger 110 by using the battery loop 500. In a case that an amount of a water flow distributed by the heat exchanger 110 to the battery loop 500 is 0, the vehicle battery pack 510 is continuously heated.

Referring to FIG. 1 and FIG. 5, in still another embodiment of the present disclosure, in a case of turning on the driving-motor water pump 420 and the heating water pump 220, the port P7 and the port P8 of the multi-way valve 450 are communicated with each other, and the port P1 and the port P2 of the multi-way valve 450 are communicated with each other. By adjusting an opening degree of the first three-way valve TPV1, a ratio of an amount of a hot water flow from the condenser 130 to the motor loop 400 to an amount of a hot water flow from the condenser 130 to the first core 310 can be adjusted, so that the motor loop 400 and the first core 310 each exchanges heat with the condenser 130 by using a certain amount of water flow to increase the temperature, thereby implementing cooling of the condenser 130 and meeting a demand for heating by the air conditioning system. In a case that an amount of water flow distributed by the condenser 130 to the motor loop 400 is 0, the driving motor 410 is cooled alone by using a loop where the one-way valve CKV is arranged. In other words, the hot water flow, driven by the driving-motor water pump 420, flows through the port P1 and the port P2 of the multi-way valve 450. Then, the hot water flow flows through the one-way valve CKV and the ports P8 and P7 of the multi-way valve 450, and reaches the radiator 430. The radiator 430 dissipates heat from the hot water flow to cool the driving motor 410. In a case that the motor loop 400 is required to store heat or the driving motor 410 is required to heat actively for the air conditioning system to supplying heat, the port P2 and the port P9 of the multi-way valve 450 are communicated with each other, and the radiator 430 is bypassed, to prevent heat from being dissipated into the outside.

Referring to FIG. 1 and FIG. 6, in still another embodiment of the present disclosure, a temperature of the vehicle battery pack 510 is increased and the air conditioning system supplies heat. The heating water pump 220 and the battery water pump 520 are turned on, the port P2 and the port P4 of the multi-way valve 450 are communicated with each other, and the port P6 and the port P8 of the multi-way valve 450 are communicated with each other. The port P8 of the multi-way valve 450 is connected to the heating water pump 220 via the first three-way valve TPV1, and the port P6 of the multi-way valve 450 is connected to the battery water pump 520. One end of the vehicle battery pack 510 is connected to the port P4 of the multi-way valve 450, and the port P2 of the multi-way valve 450 is connected to the condenser 130. A port of the first three-way valve TPV1 is connected to the heat exchanger 110, and another port of the first three-way valve TPV1 is connected to the first core 310. By adjusting the opening degree of the first three-way valve TPV1, the battery loop 500 and the first core 310 each exchanges heat with the condenser 130 by using a certain amount of water flow to increase the temperature, thereby heating the vehicle battery pack 510 by the air conditioning system. In a case that an amount of a water flow distributed by the condenser 130 to the battery loop 500 is 0, the vehicle battery pack 510 is heated by using the loop where the one-way valve CKV is arranged.

Referring to FIG. 1 and FIG. 6, in still another embodiment of the present disclosure, the port P5 and the port P7 of the multi-way valve 450 are communicated with each other, and the port P1 and the port P3 of the multi-way valve 450 are communicated with each other. In a case of turning on the driving-motor water pump 520 and the cooling water pump 210, by adjusting the opening degree of the third three-way valve TPV3, a ratio of an amount of a cold water flow from the heat exchanger 110 to the motor loop 400 to an amount of a cold water flow from the heat exchanger 110 to the second core 320 can be adjusted, so that the motor loop 400 and the second core 320 each exchanges heat with the heat exchanger 110 by using a certain amount of water flow to reduce the temperature, thereby transferring heat from the motor loop 400 to the heat exchanger 110 and implementing cooling by the air conditioning system. In a case that an amount of a water flow distributed by the heat exchanger 110 to the motor loop 400 is 0, the driving motor 410 is cooled alone by using the radiator 430. In a case that a temperature of water at the driving motor 410 is lower than an ambient temperature, the port P5 and the port P7 of the multi-way valve 450 are communicated with each other. The radiator 430 absorbs heat from the outside air, and transfers heat to the heat exchanger 110 through the motor loop 400. In a case that a temperature of water at the driving motor 410 is higher than an ambient temperature, the port P5 and the port P9 of the multi-way valve 450 are communicated with each other, and the radiator 430 is bypassed, to prevent heat from being dissipated into the outside.

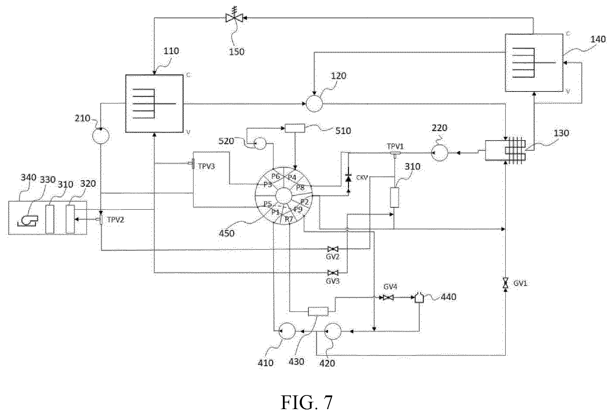

Referring to FIG. 1 and FIG. 7, in still another embodiment of the present disclosure, the battery loop 500, the motor loop 400, the heat exchanger 110, and the condenser 130 are all connected with each other, to maintain thermal equilibrium between different loops during the spring and autumn seasons when various loops of the air conditioning system have no significant demand for heat dissipating and heating. In a case that the air conditioning system needs to dissipate heat, the port P5 and the port P7 of the multi-way valve 450 are communicated with each other, to dissipate heat by using the radiator 430. In a case that the air conditioning system needs to store heat, the port P5 and the port P9 of the multi-way valve 450 are communicated with each other, and the radiator 430 is bypassed, to prevent heat from being dissipated into the outside.

In conclusion, according to the present disclosure, the problem of insufficient heating efficiency of the heat pump technology using R134 or R1234yf as refrigerant in a low-temperature environment is solved. The R134a or r1234yf refrigerant is replaced with the R290 refrigerant, which complies with the national carbon neutrality plan and is environment-friendly. In addition, rapid heating in a low-temperature environment, for example, in an environment of -30°C, can be achieved, so as to meet a demand for heating the entire vehicle. Furthermore, the refrigerant does not enter the occupant compartment, and the cooling loop and the heating loop of the air conditioning system are centrally arranged, which reduces an amount of refrigerant required to be injected and ensures safety of the vehicle air conditioning system. With the first core and the second core, dual-core cooling, dual-core heating, and cooling by the second core and heating by the first core are achieved, so as to meet requirements for the vehicle air conditioning system in terms of heating and heat supply under various conditions, thereby improving cooling and heating effects of the vehicle air conditioning system. Therefore, the present disclosure effectively overcomes some practical problems in the conventional technology, and has a high utilization value and a great usage significance.

The foregoing embodiments merely illustrate principles and functions of the present disclosure, but are not intended to limit the present disclosure. Any person skilled in the art may modify or alter the foregoing embodiments without departing from the spirit and scope of the present disclosure. Therefore, all equivalent modifications or alterations completed by those of ordinary skill in the art without departing from the spirit and technical ideas disclosed herein shall still be covered by the claims of the present disclosure.

## Claims

1. A vehicle air conditioning system, comprising:
an air conditioning loop, comprising a heat exchanger, a gas supply enthalpy-increasing module, and a condenser, wherein an output end of the condenser is connected to an input end of the gas supply enthalpy-increasing module, and an output end of the gas supply enthalpy-increasing module is connected to an input end of the heat exchanger;
an air conditioning water pump, comprising a cooling water pump and a heating water pump, wherein the cooling water pump is connected to the heat exchanger, a to-be-cooled water flow driven by the cooling water pump when the cooling water pump operates flows through the heat exchanger, the heating water pump is connected to the condenser, and a to-be-heated water flow driven by the heating water pump when the heating water pump operates flows through the condenser;
an air conditioning box, comprising a first core and a second core, wherein the first core and the second core are each connected to the heating water pump and the cooling water pump, and the to-be-cooled water flow or the to-be-heated water flow flows through the first core and the second core; and
a motor loop, comprising a multi-way valve and a driving motor, wherein the driving motor is connected to a port of the multi-way valve, and ports of the multi-way valve are communicated to cause the driving motor to be connected to the air conditioning loop.

2. The vehicle air conditioning system according to claim 1, wherein the air conditioning loop further comprises a first electronic expansion valve, and the condenser is connected to the gas supply enthalpy-increasing module via the first electronic expansion valve.

3. The vehicle air conditioning system according to claim 1, wherein the air conditioning water pump further comprises a first three-way valve, and the first three-way valve is connected to the heating water pump.

4. The vehicle air conditioning system according to claim 1, wherein the air conditioning water pump further comprises a second three-way valve, and the cooling water pump is connected to the second core via the second three-way valve.

5. The vehicle air conditioning system according to claim 1, wherein the air conditioning box comprises an air conditioning box body, and the first core and the second core are arranged in an inner chamber of the air conditioning box body.

6. The vehicle air conditioning system according to claim 1, wherein the motor loop comprises a driving-motor water pump, and one end of the driving-motor water pump is connected to the driving motor.

7. The vehicle air conditioning system according to claim 6, wherein the motor loop comprises a radiator, one end of the radiator is connected to the driving-motor water pump, and the other end of the radiator is connected to a port of the multi-way valve.

8. The vehicle air conditioning system according to claim 1, wherein the vehicle air conditioning system further comprises a battery loop, the battery loop comprises a battery water pump, and one end of the battery water pump is connected to a port of the multi-way valve.

9. The vehicle air conditioning system according to claim 8, wherein the battery loop further comprises a vehicle battery pack, one end of the vehicle battery pack is connected to the battery water pump, and the other end of the vehicle battery pack is connected to a port of the multi-way valve.

10. A vehicle, comprising the vehicle air conditioning system according to any one of claims 1 to 9.
